# EUROPEAN PATENT APPLICATION

(11) **EP 4 538 090 A1**
(43) Date of publication of application: **16.04.2025**
(21) Application number: 23203574.1
(22) Date of filing: 13.10.2023
(51) Int. Cl.: B60K 35/00, B60K 37/00, G09B 9/05

(54) **METHOD FOR PROVIDING DATA CONFIGURED FOR DEMONSTRATING A DRIVER ASSISTANCE FUNCTION OF A VEHICLE**

(71) Applicant: Volvo Car Corporation, 405 31 Göteborg (SE)
(72) Inventor: RAOUFI-DANNER, Torrin, 40531 Göteborg (SE); PETERSSON, Anna, 40531 Göteborg (SE); STREUBEL, Thomas, 40531 Göteborg (SE)
(74) Representative: Maiwald GmbH

(57) **Abstract**

The disclosure relates to a method (100) for providing data (2, 3) configured for demonstrating a driver assistance function of a vehicle (10), the driver assistance function being configured to assist a driver of the vehicle (10) at least partially in driving the vehicle (10), the method (100) comprising:
- receiving a selection (1) of the driver assistance function based on a user input on a user interface (30) of the vehicle (10),
- providing first data (2) for use by a device (60) for virtually demonstrating the selected driver assistance function, and
- providing second data (3) for controlling operation of at least one component (40) of the vehicle (10) for physically assisting the virtual demonstration of the selected driver assistance function on the device (10).

## Description

### TECHNICAL FIELD

The present disclosure relates to a method for providing data configured for demonstrating a driver assistance function of a vehicle, a computer program product, a data processing apparatus, and a vehicle comprising the data processing apparatus.

### BACKGROUND ART

Driver assistance functions in vehicles, which may partially or, in the case of autonomous driving, fully take over functions associated with the driving, such as steering, acceleration and deceleration, are great contributors to comfort and safety of driving. However, there is a problem that at least some of the available driver assistance functions are rarely used. Also, typically driver assistance functions may be deactivated. However, this is detrimental if this is because the driver does not recognize the benefit involved with the driver assistance function or does not understand its functionality.

Some safety relevant driver assistance functions such as front collision warning like or automatic emergency breaking are rarely experienced. Hence, drivers may not know how to respond when experiencing an event in which such driver assistance function is being used.

A current solution to solve the above problem is to educate the driver about the benefits and functionality of driver assistance functions by supplying a user manual with the vehicle. However, reading the user manual is cumbersome and it may be difficult to transfer the information from the user manual to the cockpit inside the vehicle, specifically for using the driver assistance functions when driving.

Further, when the driver assistance function provides for at least partially or fully automated driving, the overall traffic safety might be increased but this will generate new problems. One of these problems may be the deterioration of driving skills of drivers due to extensive usage of automated driving. It may be desirable to counteract such deterioration to avoid an increase in accidents when vehicles are being operated manually.

### SUMMARY

At least one of the above problems is at least partially solved or alleviated by the subject matter of the independent claims of the present disclosure, wherein further examples are incorporated in the dependent claims.

According to a first aspect, there is provided a method for providing data configured for demonstrating a driver assistance function of a vehicle, the driver assistance function being configured to assist a driver of the vehicle at least partially in driving the vehicle, the method comprising:
- receiving a selection of the driver assistance function based on a user input on a user interface of the vehicle,
- providing first data for use by a device for virtually demonstrating the selected driver assistance function, and
- providing second data for controlling operation of at least one component of the vehicle for physically assisting the virtual demonstration of the selected driver assistance function on the device.

Accordingly, the method provides a virtual demonstration of at least one driver assistance function, wherein at least one component of the vehicle is controlled in its operation to physically assist the virtual demonstration. Thereby, the demonstration may have a virtual component and a physical component. The physical component may be understood as a real-world component, whereas the virtual component is not in the real world but in the virtual demonstration only. Accordingly, the physical component has a real-world effect, in particular on the user and/or driver, who may be the same person. For example, the virtual component or virtual demonstration may be configured to educate the driver of the vehicle by demonstrating the selected driver assistance function. Demonstration may be understood as a provision of information, in particular of content, in particular pictures, video and/or text, on the device, in particular a display thereof. The information may be configured as demonstration information for demonstrating the selected driver assistance function. Such demonstration information may be configured for a simulation of the selected driver assistance function or, in other words, on the device. That the demonstration is virtual means that the demonstration is not occurring in the real world but virtually. The demonstration accordingly may only be provided on the device, in particular as viewed on a display thereof by the user. Accordingly, the virtual demonstration as demonstration information may only virtually exist on the device as such and not be present in the real world. For example, when a selected driver assistance function is being virtually demonstrated, than that selected driver assistance function is not actually being carried out by the vehicle in the real world but instead it may only be demonstrated, e.g., by a simulation, on the device and thus be virtual and not in the real world. Moreover, the virtual demonstration may be limited towards any information, e.g., the above mentioned content, shown to the user. No physical interaction with the user may be included by the virtual demonstration on the device. Instead, the demonstration may only be displayed on the device. On the other hand, by means of the physical assistance by the component, a physical interaction with the user or physical effect on the user apart from displaying information to them may be provided. The at least one physical component may assist the virtual demonstration by having a physical impact on the driver, such that the driver is being demonstrated the driver assistance function in two dimensions, namely a virtual dimension and a physical or, in other words, real world dimension. Thereby, the physical component may actually occur in the real world, in particular by physically interacting with the user, i.e., not by what the user sees but by physical interaction with him. The operating of the at least one component may be timed according to events or functions in the virtual demonstration to demonstrate the event or function physically and virtually at the same time. Further examples of the virtual demonstration and operation of the at least one component are given below.

Thereby, the method of the first aspect provides for a particularly immersive and easy to comprehend understanding of the functionality and benefits of driver assistance functions for drivers of vehicles. Also, when the virtual demonstration includes a virtual simulation of a driving situation, in which the driver assistance function is being carried out, e.g., a dangerous driving maneuver or collision, safety relevant driver assistance functions may be demonstrated in a way such that the driver, in the event that such situation occurs later on in real driving, is more likely to respond properly.

The data configured for demonstrating the driver assistance function may comprise both, the first data and the second data. The data may be configured for demonstrating one or more, e.g., two, three, four or more, driver assistance functions. The data may be configured for demonstrating multiple driver assistance functions separately or together, e.g., in one virtual simulation of a driving situation or different virtual simulations of driving situations, in which the driver assistance function is being demonstrated.

Exemplary driver assistance functions may be but are not limited to cruise control, adaptive cruise control, front collision warning, automatic emergency braking, lane departure warning, lane keeping assistant, lane change assistant, parking assistant, and generally any partial or full autonomous driving function, including any autonomous driving level, such as any SAE level as defined by SAE J3016, for example. Accordingly, the at least one driver assistance function may be an advanced driver assistance function, which may enable any level of autonomous driving. Accordingly, the driver assistance function may be configured to assist the driver of the vehicle at least partially or fully in driving the vehicle, i.e., without requiring any control from the driver.

The selection of the driver assistance function is received based on the user input on a user interface of the vehicle. This step may be carried out by a corresponding data processing apparatus, specifically a processor thereof, or, in other words, a computer. Such data processing apparatus or computer may be of the vehicle, e.g., in the form of a control unit or a central computing unit of the vehicle. The selection may be received from the user interface based on the thereon provided user input of the user of the vehicle, specifically the driver of the vehicle. The user interface may be any interface of the vehicle capable of receiving the user input. For example, but not limited to, the user interface may be a display, in particular a touch display configured for receiving the user input via touch interaction thereon, one or more physical buttons, keys, rotatory controls, combinations thereof or similar, a voice or speech control interface configured for receiving the user input via voice communication or, in other words, speech from the user, in particular voice commands, or any combination of the aforesaid. For example, a prompt may be provided to the user, e.g., on the user interface, such that they may provide their user input. The user input may be a selection of one or more driver assistance function from multiple available driver assistance functions to be demonstrated, for example.

The step of providing the first data may be carried out by the above-described data processing apparatus or computer. For example, the providing of the first data may be a determination of the first data based on the received selection of the driver assistance function, e.g., out of multiple available driver assistance functions. The first data is provided for use by the device for virtually demonstrating the selected driver assistance function. Accordingly, the first data may be provided, specifically by the data processing apparatus, to the device, e.g., via a wireless or wired data communication, for which the data processing apparatus or vehicle and the device may comprise data communication interfaces.

The step of providing the second data may be carried out by the above-described data processing apparatus or computer. For example, the providing of the second may be a determination of the second data based on the received selection of the driver assistance function, e.g., out of a second data sets comprising different control operations for one or more, in particular different, components of the vehicle. The second data may be provided, specifically by the data processing apparatus, to the at least one component or a control unit thereof, e.g., via a wireless or wired data communication, for which the data processing apparatus or vehicle and the at least one component or a control unit thereof may comprise data communication interfaces. However, it may also be possible that the data processing apparatus itself controls the operation of the at least one component without a control unit in between.

The method may further comprise receiving the user input on the user interface of the vehicle and correspondingly providing the selection of the driver assistance function to be received by the data processing apparatus. The method may further comprise receiving the first data by the device. Further, the method may comprise processing the first data by the device for virtually demonstrating the driver assistance function. Also, the method may comprise virtually demonstrating the selected driver assistance function on the device. Further, the method may comprise receiving the second data or a control instruction based thereon by the at least one component or a control unit thereof or the data processing apparatus of the electric vehicle for controlling the operation of the at least one component. Moreover, the method may comprise processing the second data or control instruction based thereon by the at least one component, control unit or data processing apparatus for controlling operation of the at least one component of the vehicle for physically assisting the virtual demonstration of the selected driver assistance function on the device. Further, the method may comprise operating the at least one component of the vehicle based on the provided second data.

The method may be at least partly computer-implemented, wherein one, multiple or all of the steps of the method may be carried out by a computer. The method may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to an example, the device may be at least one of a head-mounted display and a head-up display. Both provide for an immersive virtual demonstration of the selected driver assistance function inside the vehicle. The head-mounted display may be any one of, but not limited to, glasses, headset, helmet and similar, comprising a display for displaying content for the virtual demonstration, in particular video content. The head-up display may be a transparent display, e.g., embedded in the windshield of the vehicle, to which the content for the virtual demonstration may be projected, e.g., via a corresponding projector.

According to an example, the device may be separate from the vehicle and operatively couplable to the vehicle. This gives the possibility that the user may use his own device for the virtual demonstration of the selected driver assistance function. Further, specific devices, such as, e.g., head-mounted displays, may be used, which may otherwise not be used when driving the vehicle and are thus typically not provided with the vehicle. The coupling, in particular in the form of a data communication, may be wireless or wired.

According to an example, the first data may be indicative of at least one of a virtual reality, an augmented reality, and a mixed reality. Virtual reality may be understood as a simulation experience of a virtual world or, in other words, reality. It may employ different techniques, such as pose tracking and 3D near-eye displays, e.g., on the device, to give the user an immersive feel of the virtual world. The virtual world may comprise or simulate a virtual driving situation, e.g., as previously explained, in which the driver assistance function may be showcased virtually. Augmented reality may be understood as an interactive experience that combines the real world and computer-generated content. The content can span multiple sensory modalities, including visual, auditory, haptic, sensory, and olfactory. Augmented reality can include the real world, e.g., the interior of the vehicle, including, e.g., control interfaces of the vehicle, such as steering wheel and pedals, and virtual world, e.g., outside of the vehicle, e.g., a simulation of a drive scenario. It may also, or alternatively include real-time interaction by the user, e.g., with the vehicle, for example steering or pedal pressing by the user. Preferably, the vehicle may be in at least one of an autonomous driving mode and a standstill mode when real-time interaction by the user is included, as will be explained in more detail further below. Also, or alternatively, augmented reality may comprise 3D registration of virtual and/or real objects, such as the steering wheel and pedals of the vehicle. Mixed reality may comprise both or at least aspects of both, the virtual reality and augmented reality. Generally, mixed reality may be understood as a simulation experience, in which the real-world environment and a computer-generated environment are mixed together. Physical and virtual objects may co-exist in mixed reality environments and interact in real time.

According to an example, the first data may comprise simulation data for virtually simulating at least one driving situation. Further, the first data may be configured for virtually demonstrating the selected driver assistance function for the at least one driving situation. Accordingly, the selected driver assistance function may be showcased in the at least one driving situation for a particularly realistic demonstration of the selected driver assistance function, without bringing the user in danger compared to when the driving situation would be demonstrated in the real world, for example. The simulation data may comprise simulation of an environment, e.g., roads, static objects, such as houses, traffic lights, etc., moving objects, e.g., other vehicles, pedestrians, etc., and so on. In the simulated driving situation, the vehicle of the user may be involved in a dangerous driving maneuver of their vehicle or another moving object or a crash, for example, such that the driver assistance function is being simulated to prevent a crash or, in other words, collision. Alternatively, in the simulated driving situation, a normal driving scenario without any particular risk to the vehicle may be simulated, e.g., to showcase driver assistance functions such as parking assistant and lane keep assistant.

According to an example, the second data may be configured for notifying the driver of an event in the virtual demonstration by controlling operation of the at least one component. Such event may be causal for the selected driver assistance function to be demonstrated. For example, the event may be a trigger for demonstrating the driver assistance function. The event may occur during the virtual demonstration of the driver assistance function. The event may be a dangerous driving maneuver of another moving object or a pre-crash situation with another moving object. The moving object may be simulated in the virtual demonstration and may be a vehicle, for example. For example, in the case of the event being a pre-crash situation, in which the vehicle of the user is about to crash with the moving object, the assistance driver function may be an automatic emergency breaking, which is being demonstrated such that the crash may be avoided.

In an example, the at least one component may be at least one from a light, a display, and a speaker. Accordingly, for notifying the driver of the event, at least one from the light, the display and the speaker may be operated to indicate the event. For example, such light may be a warning light in the instrument cluster of the vehicle, a flashing headlight of the vehicle, a warning information on the display of the vehicle, an audio announcement, e.g., that the vehicle is about to crash, via the speaker, or similar, thereby notifying the driver of the event.

In an example, the at least one component may comprise an actuator and the at least one component may be configured to physically interact with the driver when operating the actuator. Further, the second data may be configured for physically interacting with the driver in an event in the virtual demonstration by controlling operation of the at least one actuator. The event in the virtual demonstration may be as described above. By having an actuator operated for physical interaction of the component with the driver, the virtual demonstration may be even more immersive and thus better understandable to the driver as well as better recalled in case that a similar event should occur in real world driving.

In an example, the at least one component may be at least one from a seat, an air climate system, and a safety belt. For example, a seat position of the seat may be changed by actuating a seat actuator of the seat. Such seat actuator may be an electric motor, for example. For example, a blower level may be changed by actuating an actuator of the air climate system, which may be a compressor or fan, for example. For example, the safety belt may be tensioned by means of an actuator for tensioning the safety belt, which may be an electric motor, for example. The second data may in particular be configured for controlling the actuator at a time of the event in the virtual demonstration. Thereby, the event may be physically experienced by the user in addition to the virtual demonstration.

In an example, the method may further comprise:
- receiving at least one driving control instruction based on a user control of a driving control interface of the vehicle, and
- providing the first data for the device based on the at least one received driving control instruction.
Accordingly, the method may additionally provide interaction with the vehicle via its driving control interface, for example but not limited to a steering wheel, brake pedal and gas pedal. Thereby, the user may actively influence the virtual demonstration by having the at least one driving control instruction from him on the real-world driving control interface influence the virtual demonstration, e.g., an event therein. Thereby, the at least one driver assistance function may be showcased or applied in the virtual demonstration, in particular in a virtual simulation of a driving situation, taking into account the driving of the user as driver by virtue of their driving control instructions. The driving control interface, while a component of the vehicle, may be different from the at least one component of the vehicle for physically assisting the virtual demonstration of the selected driver assistance function on the device. Thereby, the selected driver assistance function may be demonstrated even more immersive and closer to a real-world use of the selected driver assistance function.

In an example, the at least one driving control instruction may be indicative of at least one from a deceleration, an acceleration, and a steering. Accordingly, such driving control instruction may be given by the user via a brake pedal, gas pedal or steering wheel as driving control interface, for example.

In an example, the method may further comprise:
- receiving an indication of the vehicle being in at least one of an autonomous driving mode and a standstill mode,
wherein the first data and second data are provided upon receival of the indication. This may be alternative to having driving control instructions provided and used for providing the first data. Specifically, having the autonomous driving mode or standstill mode as prerequisite for providing the first data and second data, and thereby the virtual demonstration to be carried out, it may be prevented that the virtual demonstration gets in conflict with an actual driving operation of the driver, which may be a safety risk. However, when in autonomous driving mode, i.e., the vehicle is fully autonomically driven, or in standstill mode, i.e., the vehicle is not moving, the virtual demonstration may be safely carried out.

According to a second aspect, there is provided a computer program product comprising instructions which, when the program is executed by a computer, cause the computer to carry out the method of the first aspect. The computer program product may be a computer program as such or a product, e.g., a computer readable medium, having stored the computer program thereon.

According to a third aspect, there is provided a data processing apparatus comprising means for carrying out the method of the first aspect. The means may be a computer, e.g., include a processor and a computer readable medium, particularly the one described above with respect to the computer program product of the second aspect.

The data processing apparatus and/or the computer program product may comprise modules for each one of the steps of the method as described herein. For example, there may be a receiving module for receiving the selection of the driver assistance function based on the user input on the user interface of the vehicle. Further, there may be one or two providing modules for providing the first data and the second data. The modules may be implemented in hardware and/or software.

According to a fourth aspect, there is provided a vehicle comprising the data processing apparatus of the third aspect.

As described, the device may be part of the vehicle in an example. If the device is separate therefrom, according to a fifth aspect, there may be provided a system comprising the vehicle and the device.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic illustration of a vehicle according to an aspect of this disclosure and a separate device; and
- Figure 2: shows a schematic illustration of a method according to an aspect of this disclosure.

### DETAILED DESCRIPTION

The Figures are merely schematic representations and serve only to illustrate examples of the disclosure. Identical or equivalent elements are in principle provided with the same reference signs.

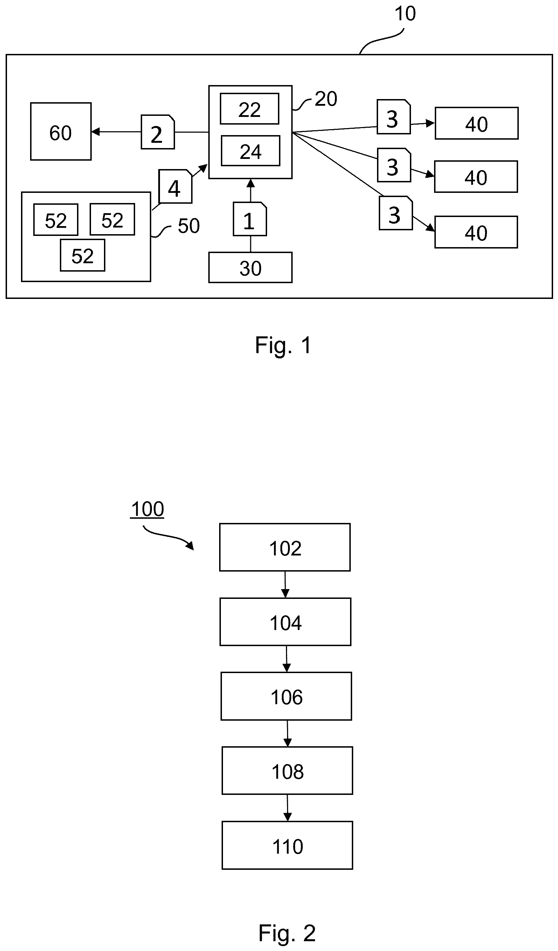

Figure 1 shows a schematic illustration of a vehicle 10, which may be a car, in particular a passenger car, for example. The vehicle 10 comprises a data processing apparatus 20, which comprises a processor 22 and a computer program product 24, which may be a computer program as such or a computer-readable storage medium, on which a computer program may be stored. When the data processing apparatus 20 executes the computer program of the computer program product 24 by virtue of its processor 22, the method 100 as schematically illustrated in Fig. 2 may be carried out.

The vehicle 10 further comprises a user interface 30, which may be coupled to the data processing apparatus 20 as shown in Fig. 1. Further, there may be a device 60, which may be part of the vehicle 10 or separate therefrom but still located inside the vehicle 10, i.e., inside its cabin. The device 60 may be any electronic device capable of virtually demonstrating a driver assistance function. The device 60 may be for example, but not limited, a head-mounted display or a head-up display. The device 60 may be configured to establish a wireless or wired data communication with the data processing apparatus 20 as indicated by the line connecting the data processing apparatus 20 with the separate device 60. For this purpose, both, the vehicle 10 and the separate device 60, may comprise respective communication interfaces, which may be based on any wireless or wired communication standard, for example. The user interface 30 may comprise any type of input means for making a user input-based selection as described further below. Such input means may be but are not limited to a touch display, a physical button, key and/or rotary control, or speech-based input means.

The vehicle 10 further comprises at least one component 40, wherein exemplary the vehicle 10 is illustrated with three different components 40. The components 40 may be, but are not limited to, a light, in particular an indication light, a display, a speaker, a seat, an air climate system, a safety belt or similar, for example.

The vehicle 10 further comprises a driving control system 50, which may comprise different driving control interfaces 52. Exemplary, three different driving control interfaces 52 are shown, by means of which the driver may control the driving of the vehicle 10. These driving control interfaces 52 may be but are not limited to a steering wheel, a brake pedal, and a gas pedal, for example.

According to the method 100 as shown in Fig. 1, in a first step 102 of method 100, an indication may be received that the vehicle 10 is in at least one of an autonomous driving mode and a standstill mode. If the indication is received, the method 100 may be continued with any of the further steps 104 to 110 of method 100, in particular at least steps 106 and 108, for example. Alternatively, the step 102 may be carried out in parallel or after step 104 of method 100, for example. Note that the order of the steps of the method 100 explained herein is merely exemplary and is not limited thereto. Further, any of the steps of the method 100 explained herein may be carried out at least by the data processing apparatus 20.

Then, in step 104, a selection 1 (see Fig. 1) of a driver assistance function of the vehicle 10 is received by the data processing apparatus 20 based on a user input on the user interface 30. The receival of the selection 1 may be preceded by the user selecting the driver assistance function via user input on the user interface 30 and the user interface 30 transmitting the selection 1 to the data processing apparatus 20, for example. The selected driver assistance function may be one of many different driver assistance functions, which may be demonstrated as explained below, and which are offered to the user for selection on the user interface 30.

Then, in a step 106, first data 2 (see Fig. 1) for use by the device 60 for virtually demonstrating the selected driver function thereon is provided by the data processing apparatus 20. The provided first data 2 may be determined based on the received selection from a first data set having different first data 2, for example. For example, the first data 2 may be provided for transmission to the device 60 via the above-mentioned connection and consequently be transmitted thereto. Thereafter, the device 60 may process the first data 2 and virtually demonstrate the selected driver assistance function. For example, the first data may be indicative of at least one of a virtual reality, an augmented reality, and a mixed reality. For example, the first data 2 may comprise simulation data for virtually simulating at least one driving situation, wherein the first data 2 may be configured for virtually demonstrating the selected driver assistance function for the at least one driving situation. In the at least one driving situation, different objects, static and moving, may be displayed on the device 60, for example.

After, before or at least partially in parallel to step 106, in step 108 of method 100, second data 3 (see Fig. 1) may be provided by the data processing apparatus 20 for controlling operation of at least one of the components 40 of the vehicle 10 for physically assisting the virtual demonstration of the selected driver assistance function. Accordingly, while the first data 2 may provide the virtual demonstration, the second data 3 may provide physical, in particular real world, assistance in the demonstration. For example, one or more of the components 40 of the vehicle 10 may be used to notify the driver of an event in the virtual demonstration and/or one or more of the components 40 may physically interact with the driver at a time of the event, thereby physically impacting the driver in the real world additionally to what he sees in the virtual demonstration. For example, when the event is a crash in the virtual demonstration of the driving situation, then the safety belt as one example of one of the components 40 may be tensioned by a corresponding actuator so as to physically assist the virtual demonstration of the crash and the driver assistance function used therein, e.g., an automatic emergency breaking, in the real world, thereby providing a more immersive experience. It becomes clear that the user, in particular driver, of the vehicle using the device 60 for the virtual demonstration should sit inside the vehicle 10 such that the components 40 of the vehicle 10 may physically assist the virtual demonstration.

Before any of the steps 102, 104, 106, 108, in between these or at least partially to one or more of these steps 102, 104, 106, 108, or, as shown in Fig. 2, after step 108, a step 110 of method 100 may be carried out, in which at least one driving control instruction 4 (see Fig. 1) may be received by the data processing apparatus 20 based on a user control of one or more of the driving control interfaces 52. Such driving control instruction 4 may be received when the user controls one of the driving control interfaces 52, for example, steps on the gas pedal or brake pedal or steers the vehicle 10 by using the steering wheel. The first data 2 may be, e.g., initially, or again, provided based on the at least one received driving control instruction 4, i.e., considering it for the virtual demonstration, in particular driving the vehicle 10 in the virtual demonstration, accordingly, e.g., steering, accelerating, or decelerating it. Accordingly, the method 100 may provide for influencing a virtual demonstration, in particular a driving situation simulated therein, via driving control instructions 4 of the driver to further enhance the immersive experience and make the virtual demonstration as real as possible, however, without posing a risk to the driver based on the assurance that the driver is not actively driving in accordance with step 102.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 1: indication
- 2: first data
- 3: second data
- 4: driver control instruction
- 10: vehicle
- 20: data processing apparatus
- 22: processor
- 24: computer program product
- 30: user interface
- 40: component
- 50: driving control system
- 52: driving control interface
- 60: device
- 100: method
- 102-110: steps

## Claims

1. A method (100) for providing data (2, 3) configured for demonstrating a driver assistance function of a vehicle (10), the driver assistance function being configured to assist a driver of the vehicle (10) at least partially in driving the vehicle (10), the method (100) comprising:
- receiving a selection (1) of the driver assistance function based on a user input on a user interface (30) of the vehicle (10),
- providing first data (2) for use by a device (60) for virtually demonstrating the selected driver assistance function, and
- providing second data (3) for controlling operation of at least one component (40) of the vehicle (10) for physically assisting the virtual demonstration of the selected driver assistance function on the device (10).

2. The method (100) of claim 1, wherein the device (60) is at least one of a head-mounted display and a head-up display.

3. The method (100) of claim 1 or 2, wherein the device (60) is separate from the vehicle (10) and operatively couplable to the vehicle (10).

4. The method (100) of any one of the previous claims, wherein the first data (2) is indicative of at least one of a virtual reality, an augmented reality, and a mixed reality.

5. The method (100) of any one of the previous claims, wherein the first data (2) comprises simulation data for virtually simulating at least one driving situation, and wherein the first data (2) is configured for virtually demonstrating the selected driver assistance function for the at least one driving situation.

6. The method (100) of any one of the previous claims, wherein the second data (3) is configured for notifying the driver of an event in the virtual demonstration by controlling operation of the at least one component (40).

7. The method (100) of claim 6, wherein the at least one component (40) is at least one from a light, a display, and a speaker.

8. The method (100) of any one of the previous claims, wherein the at least one component (40) comprises an actuator and the at least one component (40) is configured to physically interact with the driver when operating the actuator, and wherein the second data (3) is configured for physically interacting with the driver in an event in the virtual demonstration by controlling operation of the at least one actuator.

9. The method (100) of claim 8, wherein the at least one component (40) is at least one from a seat, an air climate system, and a safety belt.

10. The method (100) of any one of the previous claims, the method (100) further comprising:
- receiving at least one driving control instruction (4) based on a user control of a driving control interface (52) of the vehicle (10), and
- providing the first data (2) for the device (60) based on the at least one received driving control instruction (4).

11. The method (100) of claim 10, wherein the at least one driving control instruction (4) is indicative of at least one from a deceleration, an acceleration, and a steering.

12. The method (100) of any one of claims 1 to 9, the method (100) further comprising:
- receiving an indication of the vehicle (10) being in at least one of an autonomous driving mode and a standstill mode,
wherein the first data (2) and second data (3) are provided upon receival of the indication.

13. A computer program product (24) comprising instructions which, when executed by a computer, carry out the method of any one of claims 1 to 12.

14. A data processing apparatus (20) comprising means for carrying out the method (100) of any one of claims 1 to 12.

15. A vehicle (10) comprising the data processing apparatus (20) of claim 14.
